# EUROPEAN PATENT APPLICATION

(11) **EP 3 926 003 A1**
(43) Date of publication of application: **22.12.2021**
(21) Application number: 21177375.9
(22) Date of filing: 02.06.2021
(51) Int. Cl.: C08K 3/36, C08K 5/3492, C08L 9/02, C08L 9/06, C08L 61/02, F16L 11/08, C09J 109/02, C09J 109/06, B32B 25/10, B32B 25/14

(54) **RUBBER COMPOSITION, LAMINATE, AND MARINE HOSE**

(30) Priority: 16.06.2020 JP 2020103940
(71) Applicant: The Yokohama Rubber Co., Ltd., Tokyo 105-8685 (JP)
(72) Inventor: TOGO, Mari, Kanagawa, 254-8601 (JP)
(74) Representative: Grünecker Patent- und Rechtsanwälte PartG mbB

(57) **Abstract**

Object:

Provided is a rubber composition, of which cured product has excellent adhesiveness between the cured product and a rubber layer containing acrylonitrile-butadiene rubber or styrene-butadiene rubber, and has excellent strength, a laminate, and a marine hose.

[Resolution Means]

Disclosed is a rubber composition including a rubber component containing from 30 to 80 mass% of an acrylonitrile-butadiene copolymer and from 20 to 70 mass% of a styrene-butadiene copolymer, silica, resorcinol resin, and at least one melamine compound selected from the group consisting of methylol melamines, methylol melamine alkyl ethers, and a condensate thereof.

## Description

### Technical Field

The present invention relates to a rubber composition, a laminate, and a marine hose.

### Background Art

In the related art, rubber products are used in a variety of technical fields. Among those rubber products are large items such as marine hoses. Marine hoses are used, for example, to transport petroleum or the like underwater.

In order to transport petroleum as described above, marine hoses generally have, as an innermost layer, a tube rubber composed of acrylonitrile-butadiene rubber or the like which have excellent oil resistance, and also have, at outside of the innermost layer, a carcass layer or the like in which a reinforcing cord such as a fiber cord or a steel cord is coated with rubber (for example, Patent Document 1).

On the other hand, in order to improve adhesiveness between a canvas and a rubber coating that covers the canvas, Patent Document 2 describes a rubber coating composition for a conveyor belt, including a diene rubber component, di-2-benzothiazolyl disulfide, silica, cresol formaldehyde resin, and modified ether methylol melamine, where the di-2-benzothiazolyl disulfide content is 0.25 parts by mass or greater and 3.0 parts by mass or less per 100 parts by mass of the diene rubber component, the silica content is 5.0 parts by mass or greater and 15.0 parts by mass or less per 100 parts by mass of the diene rubber component, the cresol formaldehyde resin content is 1 part by mass or greater and 5 parts by mass or less per 100 parts by mass of the diene rubber component, and the modified etherified methylol melamine content is 1 part by mass or greater and 4 parts by mass or less per 100 parts by mass of the diene rubber component.

### Citation List

### Patent Document

Patent Document 1: JP 07-63288A
Patent Document 2: WO 2018/179629

### Summary of Invention

### Technical Problem

For marine hoses, in order to improve the adhesiveness between an innermost layer (tube rubber) of a marine hose and the carcass layer in which a reinforcing cord such as a fiber cord is coated with rubber, the present inventors have prepared a rubber composition with reference to Patent Document 2 and have evaluated the rubber composition as a rubber composition for an interlayer adhesive layer, which is applied between the innermost layer of the marine hose and the carcass layer.

As a result, it has been found that the adhesiveness to a rubber layer containing acrylonitrile-butadiene rubber or styrene-butadiene rubber may be low or strength of a cured product to be obtained from the rubber composition may be low (Comparative Examples 1, 10, and 11).

Therefore, an object of the present invention is to provide a rubber composition, of which cured product has excellent adhesiveness between the cured product and a rubber layer containing acrylonitrile-butadiene rubber or styrene-butadiene rubber, and has excellent strength.

Another object of the present invention is to provide a laminate and a marine hose.

### Solution to Problem

As a result of diligent research to solve the problems described above, the present inventors have found that when a rubber composition contains a rubber component containing from 30 to 80 mass% of an acrylonitrile-butadiene copolymer and from 20 to 70 mass% of a styrene-butadiene copolymer, silica, resorcinol resin, and at least one melamine compound selected from the group consisting of methylol melamines, methylol melamine alkyl ethers, and condensates thereof, an effect of obtaining excellent adhesiveness between a cured product to be obtained from the rubber composition and a rubber layer containing acrylonitrile-butadiene rubber or styrene-butadiene rubber and excellent strength of the cured product can be obtained. These findings ultimately led to the present invention.

Embodiments of the present invention are based on the findings described above, and specifically, solve the problems described above by the following configurations.
[1] A rubber composition including a rubber component containing from 30 to 80 mass% of an acrylonitrile-butadiene copolymer and from 20 to 70 mass% of a styrene-butadiene copolymer,
   silica,
   resorcinol resin, and
   at least one melamine compound selected from the group consisting of methylol melamines, methylol melamine alkyl ethers, and a condensate thereof.
[2] The rubber composition described in [1], which has the melamine compound content of from 30 to 250 mass% of the resorcinol resin content.
[3] The rubber composition described in [1] or [2], further including a sulfenamide-based vulcanization accelerator,
   wherein the rubber composition has the sulfenamide-based vulcanization accelerator content of from 0.7 to 1.2 parts by mass per 100 parts by mass of the rubber component.
[4] The rubber composition described in any one of [1] to [3], which has the silica content of from 10 to 40 parts by mass per 100 parts by mass of the rubber component.
[5] The rubber composition described in any one of [1] to [4], which has the resorcinol resin content of from 0.3 to 8.0 parts by mass per 100 parts by mass of the acrylonitrile-butadiene copolymer.
[6] The rubber composition described in any one of [1] to [5], which is used to form a marine hose.
[7] A laminate including a vulcanized rubber layer A formed using the rubber composition described in any one of [1] to [5],
   a vulcanized rubber layer B containing acrylonitrile-butadiene rubber or styrene-butadiene rubber, and
   a polyester fiber as a reinforcing layer,
   wherein the vulcanized rubber layer A is adjacent to the vulcanized rubber layer B.
[8] The laminate described in [7], further including, as the vulcanized rubber layer B, a vulcanized rubber layer B-1 containing the acrylonitrile-butadiene rubber and a vulcanized rubber layer B-2 containing the styrene-butadiene rubber,
   wherein the vulcanized rubber layer B-1, the vulcanized rubber layer A, and the vulcanized rubber layer B-2 are stacked in this order.
[9] A marine hose formed using the rubber composition described in any one of [1] to [5].
[10] The marine hose described in [9], including an innermost layer, an interlayer adhesive layer, and a carcass layer, which are stacked in this order, wherein
   the innermost layer is a vulcanized rubber layer containing acrylonitrile-butadiene rubber,
   the interlayer adhesive layer is a vulcanized rubber layer formed using the rubber composition, and
   the carcass layer includes a vulcanized rubber layer containing styrene-butadiene rubber and a polyester fiber.
[11] The marine hose described in [10], wherein the innermost layer is adjacent to the interlayer adhesive layer, and the interlayer adhesive layer is adjacent to the vulcanized rubber layer containing the styrene-butadiene rubber contained in the carcass layer.

### Advantageous Effects of Invention

The rubber composition of the present invention has excellent adhesiveness between a cured product to be obtained from the rubber composition and a rubber layer containing acrylonitrile-butadiene rubber or styrene-butadiene rubber, and strength of the cured product is excellent.

The present invention can also provide a laminate and a marine hose.

### Description of Embodiments

Embodiments of the present invention will be described in detail below.

Note that in the present specification, value range indicated by using "from... to..." means the range including the former value as a lower limit value and the latter value as an upper limit value.

In the present specification, unless otherwise indicated, a substance corresponding to each component can be used alone or in combination of two or more types thereof. In a case where a component includes two or more types of substances, the component content means the total amount including the two or more types of substances.

In the present specification, the production method of each component is not particularly limited unless otherwise noted. Examples of the method include a known method.

In the present invention, as one of the effects of the present invention, "excellent adhesiveness between a cured product to be obtained from the rubber composition and a rubber layer containing acrylonitrile-butadiene rubber or styrene-butadiene rubber" refers to the fact that the cured product to be obtained from the rubber composition has excellent adhesiveness to a rubber layer containing acrylonitrile-butadiene rubber and excellent adhesiveness to a rubber layer containing styrene-butadiene rubber.

In the present specification, a case where at least one of the adhesiveness between the cured product to be obtained from the rubber composition and the rubber layer containing acrylonitrile-butadiene rubber or styrene-butadiene rubber and the strength of the cured product is more excellent may be referred to as that the effect of the present invention is more excellent.

### Rubber composition

A rubber composition of the present invention is a rubber composition containing a rubber component containing from 30 to 80 mass% of an acrylonitrile-butadiene copolymer and from 20 to 70 mass% of a styrene-butadiene copolymer,
silica,
resorcinol resin, and
at least one melamine compound selected from the group consisting of methylol melamines, methylol melamine alkyl ethers, and a condensate thereof.

The rubber composition according to the present invention is thought to achieve desired effects as a result of having such a configuration. Although the reason is not clear, it is assumed to be as follows.

First, since the rubber composition of the present invention contains the rubber component containing from 30 to 80 mass% of an acrylonitrile-butadiene copolymer and from 20 to 70 mass% of a styrene-butadiene copolymer, a cured product obtained from the rubber composition of the present invention has excellent adhesiveness to the rubber layer containing acrylonitrile-butadiene rubber or styrene-butadiene rubber.

Here, in general, it is often difficult to vulcanize and bond a rubber composition containing acrylonitrile-butadiene rubber and a rubber composition containing acrylonitrile-butadiene rubber (for example, acrylonitrile-butadiene rubber referred to as extremely high nitrile) having a larger amount of acrylonitrile than the above-mentioned acrylonitrile-butadiene rubber only with sulfur cross-linking.

However, the rubber composition of the present invention contains a resorcinol resin and the above-mentioned melamine compound with respect to the above-mentioned rubber component. Thus, it is considered that when the rubber composition of the present invention is vulcanized while being adjacent to a rubber composition (excluding the rubber composition of the present invention) containing acrylonitrile-butadiene rubber or styrene-butadiene rubber, due to a reaction between the above-mentioned resorcinol resin and formaldehyde produced from the above-mentioned melamine compound, and the like, the cured product obtained from the rubber composition of the present invention has excellent adhesiveness not only to the rubber layer containing styrene-butadiene rubber, but also to the rubber layer (different from the rubber layer containing styrene-butadiene rubber). The amount of acrylonitrile contained in the acrylonitrile-butadiene rubber contained in the rubber layer containing the acrylonitrile-butadiene rubber is not particularly limited, and the amount of acrylonitrile may be large. The rubber layer containing the acrylonitrile-butadiene rubber is different from the cured product obtained from the rubber composition of the present invention. The rubber layer containing styrene-butadiene rubber is different from the cured product obtained from the rubber composition of the present invention.

The rubber composition according to an embodiment of the present invention will be described below.

### Rubber component

In the rubber composition of the present invention, the rubber component contains an acrylonitrile-butadiene copolymer and a styrene-butadiene copolymer.

### Acrylonitrile-butadiene copolymer

In the present invention, an acrylonitrile-butadiene copolymer (NBR) is a copolymer of acrylonitrile and butadiene. The acrylonitrile-butadiene copolymer may be a hydrogen additive of a copolymer of acrylonitrile and butadiene.

The NBR is preferably a copolymer (not a hydrogen additive) of acrylonitrile and butadiene from the perspective of achieving superior effects of the present invention.

### Acrylonitrile amount

The amount of acrylonitrile in the NBR (a repeating unit content by acrylonitrile in the NBR; hereinafter may be referred to as "AN amount") is preferably from 10 to 40 mass% in the NBR and more preferably from 15 to 25 mass%, from the perspective of achieving superior effects of the present invention.

The amount of acrylonitrile (bonded acrylonitrile amount) in the acrylonitrile-butadiene copolymer can be measured in accordance with JIS K6451-2: 2016 (Kjeldahl method).

### Mooney viscosity

The Mooney viscosity of the NBR is preferably from 45 to 85 and more preferably 60 to 80, from the perspective of achieving superior effects of the present invention.

In the present invention, the Mooney viscosity of the acrylonitrile-butadiene copolymer can be measured under conditions of 100°C in accordance with JIS K6300-1: 2013.

### Styrene-butadiene copolymer

In the present invention, a styrene-butadiene copolymer (SBR) is a copolymer of a styrene-based monomer and butadiene.

Examples of the styrene-based monomer include styrene, 2-methylstyrene, 3-methylstyrene, 4-methylstyrene, α-methylstyrene, 2,4-dimethylstyrene, 2,4-diisopropylstyrene, 4-tert-butylstyrene, tertbutoxystyrene, and N,N-dimethyl aminoethylstyrene. Styrene is particularly preferable.

### • Weight average molecular weight (Mw) of styrene-butadiene copolymer

A weight average molecular weight of the styrene-butadiene copolymer is preferably from 300000 to 2000000, from the perspective of achieving superior effects of the present invention.

The weight average molecular weight of the styrene-butadiene copolymer can be measured by gel permeation chromatography (GPC), based on calibration with polystyrene standard using tetrahydrofuran as a solvent.

### • Amount of styrene in styrene-butadiene copolymer

The amount of styrene (the repeating unit content by the styrene-based monomer in the styrene-butadiene copolymer) in the styrene-butadiene copolymer is preferably from 15 to 40 mass% and more preferably 20 to 35 mass%, from the perspective of achieving superior effects of the present invention.

The amount of styrene in the styrene-butadiene copolymer can be measured by infrared spectroscopy (Hampton method).

### • Other rubbers

In addition to the NBR and the SBR, the rubber component may further include a rubber component (other rubber) other than the NBR and the SBR.

Examples of other rubbers include diene-based rubber such as natural rubber (NR), isoprene rubber (IR), butadiene rubber (BR), chloroprene rubber (CR), butyl rubber (IIR), and ethylene-propylene-diene rubber (EPDM).

The rubber component preferably includes only the NBR and the SBR, from the perspective of achieving superior effects of the present invention.

### Acrylonitrile-butadiene copolymer content

In the present invention, the acrylonitrile-butadiene copolymer content is from 30 to 80 mass% based on the entire amount of the rubber component.

The NBR content is preferably from 50 to 80 mass% and more preferably from 60 to 80 mass% in the entire amount of the rubber component, from the perspective of achieving superior effects of the present invention and achieving excellent tensile strength of a cured product to be obtained from the rubber composition.

### Styrene-butadiene copolymer content

In the present invention, the styrene-butadiene copolymer content is from 20 to 70 mass% based on the entire amount of the rubber component.

The SBR content is preferably from 20 to 50 mass% and more preferably from 20 to 40 mass% in the entire amount of the rubber component, from the perspective of achieving superior effects of the present invention and achieving excellent tensile strength of a cured product to be obtained from the rubber composition.

### Silica

The rubber composition of the present invention contains silica.

By containing silica in the rubber composition of the present invention, the strength and tensile properties of a cured product to be obtained from the rubber composition are excellent.

The silica contained in the rubber composition of the present invention is not particularly limited. Examples of the method include a known silica.

Among these, silica is preferably acidic silica having a pH of less than 7, from the perspective of achieving superior effects of the present invention (particularly the strength of a cured product to be obtained from the rubber composition).

In the present invention, the pH of silica can be measured in accordance with JIS K5101-17-2: 2004.

### Silica content

The silica content is preferably from 10 to 40 parts by mass and more preferably from 15 to 30 parts by mass per 100 parts by mass of the rubber component, from the perspective of achieving superior effects of the present invention (particularly the strength of a cured product to be obtained from the rubber composition).

### Resorcinol resin

The rubber composition of the present invention contains a resorcinol resin.

In the present invention, the resorcinol resin can function as a methylene acceptor.

In the rubber composition the present invention, the resorcinol resin imparts adhesiveness to the rubber composition of the present invention by reacting with formaldehyde or the like generated from a melamine compound described below, and the rubber composition of the present invention has excellent adhesiveness to the rubber layer containing acrylonitrile-butadiene rubber or styrene-butadiene rubber.

The resorcinol resin contained in the rubber composition of the present invention is a condensate of resorcin (1,3-benzenediol) and formaldehyde.

The resorcinol resin may further include unreacted resorcin and/or formaldehyde.

The resorcinol resin may also be a modified resorcinol resin. Examples of the modified resorcinol resin include those in which the repeating unit of the resorcinol resin is partially alkylated (specifically, for example, resorcin constituting the resorcinol resin is partially alkylated).

### Resorcinol resin content based on rubber component

The resorcinol resin content is preferably from 1 to 10 parts by mass and more preferably from 2.0 to 5.0 parts by mass per 100 parts by mass of the rubber component, from the perspective of achieving superior effects of the present invention.

### Resorcinol resin content based on NBR

The resorcinol resin content is preferably from 0.3 to 8.0 parts by mass and more preferably from 0.5 to 4.0 parts by mass per 100 parts by mass of the acrylonitrile-butadiene copolymer, from the perspective of achieving superior effects of the present invention.

### Melamine compound

The rubber composition of the present invention contains at least one type of melamine compound selected from the group consisting of methylol melamines, methylol melamine alkyl ethers, and a condensate thereof.

In the present invention, the melamine compound can function as a methylene donor.

The melamine compound can be decomposed into formaldehyde or the like by heat during vulcanization, for example.

### Methylol melamines

Methylol melamines as a melamine compound are compounds in which one to six formaldehydes have been added to three amino groups (-NH₂) of melamine.

In the present invention, methylol melamines do not include methylol melamine alkyl ether described below.

Examples of the methylol melamines include monomethylol melamine and hexamethylol melamine.

### Methylol melamine alkyl ethers

Methylol melamine alkyl ethers as melamine compounds are compounds in which at least some or all of the methylol groups (hydroxymethyl groups) of the methylol melamines are alkyl-etherified.

Examples of the methylol melamine alkyl ethers include hexamethylol melamine pentamethyl ether (the following structure), 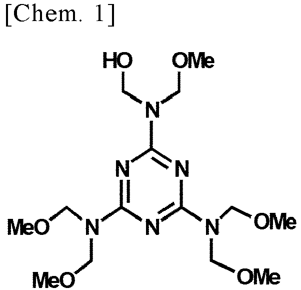 and hexamethylol melamine hexamethyl ether (the following structure).

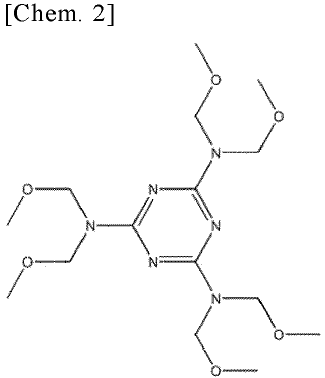

### Condensate

In the present invention, a condensate as a melamine compound is a condensate of the methylol melamines and/or the methylol melamine alkyl ethers.

Examples of the condensate of the methylol melamine alkyl ethers include condensates of hexamethylol melamine pentamethyl ether and hexamethylol melamine hexamethyl ether.

The condensate may be a partial condensate of the methylol melamines and/or the methylol melamine alkyl ethers.

Examples of the condensate of hexamethylol melamine pentamethyl ether include compounds represented by the following formula (where n is from 2 to 3).

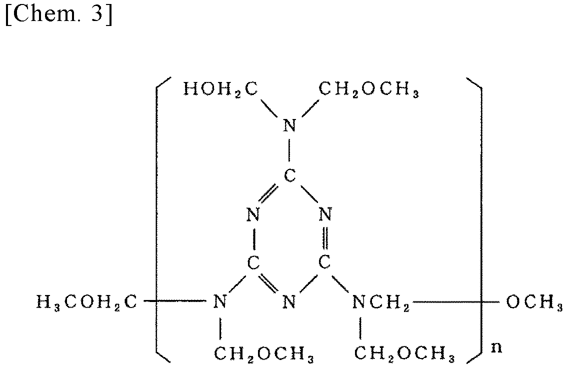

Examples of the condensate of hexamethylol melamine hexamethyl ether include compounds represented by the following formula (where n is from 2 to 3).

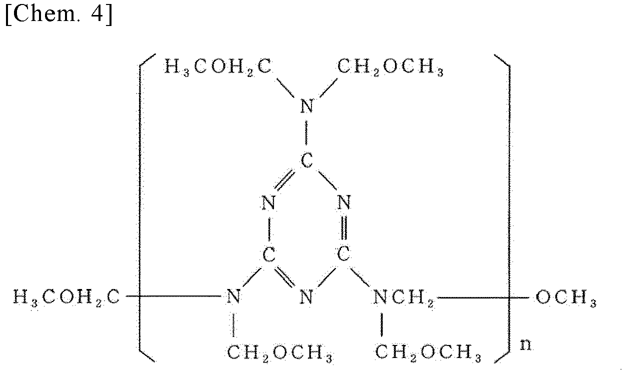

From the perspective of achieving superior effects of the present invention, the melamine compound preferably contains the methylol melamine alkyl ethers and/or condensate thereof, more preferably contains hexamethylol melamine pentamethyl ether and a mixture of a condensate thereof, or hexamethylol melamine hexamethyl ether and/or condensate thereof, and still more preferably contains hexamethylol melamine hexamethyl ether and/or condensate thereof.

### Melamine compound content based on rubber component

The melamine compound content is preferably from 1 to 10 parts by mass and more preferably from 2.0 to 7.0 parts by mass per 100 parts by mass of the total of the rubber component, from the perspective of achieving superior effects of the present invention.

### Melamine compound content based on acrylonitrile-butadiene copolymer

The melamine compound content is preferably from 0.3 to 8.0 parts by mass and more preferably from 0.5 to 5.0 parts by mass per 100 parts by mass of the acrylonitrile-butadiene copolymer, from the perspective of achieving superior effects of the present invention.

### Melamine compound content based on resorcinol resin

The melamine compound content is preferably from 30 to 250 mass% and more preferably from 80 to 150 mass% based on the resorcinol resin content, from the perspective of achieving superior effects of the present invention.

The rubber composition of the present invention uses the melamine compound as a methylene donor. As a compound (other than formaldehyde) having nitrogen, which is produced after the melamine compound is decomposed, it is preferable to use the melamine compound as a methylene donor, because the melamine compound does not hydrolyze polyester or does not easily hydrolyze polyester.

As the compound having nitrogen, which is produced after the melamine compound is decomposed, when the melamine compound is methylol melamine alkyl ethers, examples of the compound having nitrogen include compounds in which ether in the methylol melamine alkyl ethers is partially decomposed, methylol melamines, and melamine. When the melamine compound is methylol melamine, for example, a compound where the methylol melamine in methylol melamine is partially decomposed, or melamine.

Thus, for example, in a rubber product in which a polyester is used as a reinforcing layer, a certain rubber layer is adjacent to the reinforcing layer, and the rubber layer according to the rubber composition of the present invention is adjacent to the above-mentioned rubber layer, even if the compound having nitrogen is transferred to the certain rubber layer, the compound does not hydrolyze the polyester or does not easily hydrolyze the polyester. Thus, it is conceived that, according to the rubber composition of the present invention, it is difficult to reduce the reinforcing properties and adhesiveness of a polyester reinforcing layer.

An example of a preferable aspect is one in which the rubber composition of the present invention is substantially free of hexamethylenetetramine.

In the present invention, substantially free of hexamethylenetetramine refers to the hexamethylenetetramine content of from 0 to 0.1 mass% based on the entire rubber composition of the present invention.

### Vulcanization accelerator

The composition of the present invention can further contain a vulcanization accelerator.

### Sulfenamide-based vulcanization accelerator

The composition of the present invention preferably further contains a sulfenamide-based vulcanization accelerator as a vulcanization accelerator from the perspective of achieving superior effects of the present invention and achieving excellent tensile strength of a cured product to be obtained from the rubber composition.

Examples of the sulfenamide-based vulcanization accelerator include N-cyclohexyl benzothizole sulfenamide, N-tert-butyl benzothizole sulfenamide, N-oxydiethylene benzothizole sulfenamide, and N,N-dicyclohexyl benzothizole sulfenamide.

Of these, N-alkyl-2-benzothiazolyl sulfenamide is preferable, and N-tert-butyl-2-benzothiazolyl sulfenamide is more preferable from the perspective of achieving superior effects of the present invention.

### Sulfenamide-based vulcanization accelerator content

The sulfenamide-based vulcanization accelerator content is preferably from 0.7 to 1.2 parts by mass and more preferably from 0.8 to 0.9 parts by mass per 100 parts by mass of the rubber component from the perspective of achieving superior effects of the present invention and achieving excellent reinforcing properties of the polyester reinforcing layer and/or adhesiveness of the polyester reinforcing layer.

### Carbon black

From the perspective of achieving superior effects of the present invention, the rubber composition of the present invention preferably further contains carbon black. The carbon black is not particularly limited. Examples of the method include a known silica.

Among these, from the perspective of achieving superior effects of the present invention, the carbon black preferably includes carbon blacks of FT (Fine Thermal) grade, GPF (General Purpose Furnace) grade, SRF (Semi-Reinforcing Furnace) grade, and the like, more preferably includes carbon black of FT grade or SRF grade, and further preferably includes carbon black of FT grade.

### • Nitrogen adsorption specific surface area of carbon black

The nitrogen adsorption specific surface area (N₂SA) of the carbon black is preferably from 20 to 40 m²/g and more preferably from 20 to 30 m²/g, from the perspective of achieving superior effects of the present invention.

The nitrogen adsorption specific surface area of the carbon black can be measured in accordance with JIS K 6217-2:2017 "Carbon black for rubber industry-Fundamental characteristics-Part 2: Determination of specific surface area-Nitrogen adsorption methods-Single-point procedures".

### • Dibutyl phthalate oil absorption of carbon black

The dibutyl phthalate oil absorption (DBP oil absorption) of the carbon black is preferably from 20 to 80 ml/100 g and more preferably from 20 to 50 ml/100 g, from the perspective of achieving superior effects of the present invention.

"Carbon black for rubber industry-Fundamental characteristics-Part The dibutyl phthalate oil absorption (DBP absorption) of the carbon black can be measured in accordance with JIS K6217-4: 2017 "Carbon black for rubber industry-Fundamental characteristics-Part 4: Determination of DBP absorption" 4: Determination of DBP absorption"

### • Carbon black content

The carbon black content is preferably from 40 to 100 parts by mass and more preferably from 50 to 80 parts by mass per 100 parts by mass of the rubber component, from the perspective of achieving superior effects of the present invention.

### Sulfur

The rubber composition of the present invention preferably further contains sulfur from the perspective of achieving superior effects of the present invention and achieving excellent oil resistance. The sulfur is not particularly limited. Examples of the method include a known silica.

### • Sulfur content

Thee sulfur content is preferably from 1 to 4 parts by mass and more preferably from 2 to 3 parts by mass per 100 parts by mass of the rubber component, from the perspective of achieving superior effects of the present invention and achieving excellent oil resistance.

### Tackifier

From the perspective of achieving superior effects (particularly the strength of the cured product) of the present invention, the rubber composition of the present invention preferably further contains a tackifier.

Examples of the tackifier include rosin-based resins, terpene-based resins, petroleum resins, coumarone resins), and phenolic resins (except for the resorcinol resin).

From the perspective of achieving superior effects of the present invention, among these resins, the tackifier preferably contains coumarone resin and/or alkyl phenol resin, and more preferably contains coumarone resin and alkyl phenol resin.

Examples of coumarone resin include polymers of coumarone (1-benzofuran), polymers of a coumarone derivative, coumarone-indene resins (copolymers of coumarone and indene), and hydrogenated coumarone-indene resins.

Examples of alkyl phenol resin include condensates of an alkyl phenol component and aldehydes.

Examples of the alkyl phenol component include phenols having an alkyl group having from 1 to 18 carbon atoms, such as cresol, isopropyl phenol, t-butyl phenol, amylphenol, octylphenol (e.g., p-octylphenol), nonylphenol, dodecylphenol, allylphenol, and cyclohexylphenol, and various derivatives such as methylol derivatives thereof and halogenated derivatives thereof.

Among these, octylphenol is preferable, and p-octylphenol is more preferable.

Examples of the aldehydes include formaldehyde, paraformaldehyde, trioxone, polyoxymethylene, acetaldehyde, propionaldehyde, polyoxymethylene, chloral, hexamethylenetetramine, furfural, glyoxal, N-butyl aldehyde, caproaldehyde, allyl aldehyde, benzaldehyde, crotonaldehyde, acrolein, tetraoxymethylene, phenylacetaldehyde, o-tolualdehyde, salicylaldehyde, and paraxylenedimethyl ether.

### • Tackifier content

The tackifier content (a total amount of tackifier when two or more kinds of tackifiers are used) is preferably from 3 to 30 parts by mass and more preferably from 10 to 20 parts by mass per 100 parts by mass of the rubber component, from the perspective of achieving superior effects of the present invention.

When coumarone resin and alkyl phenol resin are used in combination as a tackifier, the coumarone resin content is preferably from 1.5 to 3 times the alkyl phenol resin content in terms of parts by mass.

### Additives

The rubber composition of the present invention can further contain additives such as vinyl chloride resin, plasticizer (including aromatic oil, and the like), zinc oxide, stearic acid, anti-aging agents, antioxidants, antistatic agents, flame retardants, vulcanizing agents other than sulfur, vulcanization retarders, and fillers other than carbon black and silica, unless such an additive impairs the object of the present invention.

A method of producing the rubber composition of the present invention is not particularly limited, and examples thereof include a method of mixing a component excluding the melamine compound, sulfur, and vulcanization accelerator under conditions at from 80 to 140°C to obtain a mixture, then adding the melamine compound, the sulfur, and the vulcanization accelerator to the obtained mixture, and mixing these components under conditions at from 40 to 100°C.

Examples of devices used for mixing include Banbury mixers, kneaders, and rolls.

The rubber composition of the present invention can be vulcanized under publicly known vulcanizing conditions.

The rubber composition of the present invention can be used, for example, to form a marine hose.

In the marine hose, constituent members using the rubber composition of the present invention are not particularly limited. In particular, in the rubber composition of the present invention, from the viewpoint that the adhesiveness between the cured product to be obtained from the rubber composition and the rubber layer containing acrylonitrile-butadiene rubber or styrene-butadiene rubber and the strength of the cured product are excellent, an example of a preferable aspect is one in which in the rubber composition of the present invention, an interlayer adhesive layer that adheres an innermost layer containing acrylonitrile-butadiene rubber and a carcass layer containing styrene-butadiene rubber is formed in a marine hose.

### Multilayer structure

A laminate of the present invention has a vulcanized rubber layer A formed using the rubber composition of the present invention,
a vulcanized rubber layer B containing acrylonitrile-butadiene rubber or styrene-butadiene rubber, and
a polyester fiber as a reinforcing layer, and
in this laminate, the vulcanized rubber layer A is adjacent to the vulcanized rubber layer B.

### Vulcanized rubber layer A

In the laminate of the present invention, the vulcanized rubber layer A is a vulcanized rubber layer formed by using the rubber composition of the present invention.

The rubber composition used in the vulcanized rubber layer A is not particularly limited as long as it is the rubber composition of the present invention.

### Vulcanized rubber layer B

In the laminate of the present invention, the vulcanized rubber layer B is a vulcanized rubber layer containing acrylonitrile-butadiene rubber or styrene-butadiene rubber.

The rubber composition of the present invention is excluded from the rubber composition used to form the vulcanized rubber layer B.

The vulcanized rubber layer B can include one or both of a vulcanized rubber layer B-1 containing acrylonitrile-butadiene rubber and a vulcanized rubber layer B-2 containing styrene-butadiene rubber.

An example of a preferable aspect is one in which the vulcanized rubber layer B has both the vulcanized rubber layer B-1 containing acrylonitrile-butadiene rubber and the vulcanized rubber layer B-2 containing styrene-butadiene rubber. In this case, preferably, the vulcanized rubber layer A is disposed between the vulcanized rubber layer B-1 and the vulcanized rubber layer B-2, the vulcanized rubber layer B-1 is adjacent to the vulcanized rubber layer A, and the vulcanized rubber layer A is adjacent to the vulcanized rubber layer B-2.

### Vulcanized rubber layer B-1 containing acrylonitrile-butadiene rubber

A rubber composition BB-1 used in the vulcanized rubber layer B-1 containing acrylonitrile-butadiene rubber is not particularly limited as long as it is the rubber composition containing acrylonitrile-butadiene rubber. However, the rubber composition of the present invention is removed from the rubber composition BB-1.

The rubber composition BB-1 is not particularly limited except that it contains acrylonitrile-butadiene rubber.

The acrylonitrile-butadiene rubber contained in the rubber composition BB-1 is not particularly limited. Examples of the method include a known method.

### • Amount of acrylonitrile in acrylonitrile-butadiene rubber

The amount of acrylonitrile in acrylonitrile-butadiene rubber (the repeating unit content by acrylonitrile in the acrylonitrile-butadiene rubber) contained in the rubber composition BB-1 is not particularly limited. From the perspective of achieving superior effects of the present invention, the amount of acrylonitrile is preferably from 10 to 50 mass% in the acrylonitrile-butadiene rubber.

Since the cured product obtained from the rubber composition of the present invention has excellent adhesiveness to the rubber layer containing acrylonitrile-butadiene rubber, regardless of the amount of acrylonitrile in acrylonitrile-butadiene rubber contained in the rubber composition BB-1, the amount of acrylonitrile may be large.

Thus, even if the amount of acrylonitrile in acrylonitrile-butadiene rubber contained in the rubber composition BB-1 exceeds 40 mass% in the acrylonitrile-butadiene rubber, excellent adhesiveness between the vulcanized rubber layer A and the vulcanized rubber layer B can be achieved.

The amount of acrylonitrile (bonded acrylonitrile amount) in the acrylonitrile-butadiene rubber can be measured in accordance with JIS K6451-2: 2016 (Kjeldahl method).

In the rubber composition BB-1, the acrylonitrile-butadiene rubber content is preferably from 50 to 100 mass% and more preferably 100 mass%, based on the entire amount of the rubber component in the rubber composition BB-1.

In the rubber composition BB-1, the acrylonitrile-butadiene rubber content is preferably from 20 to 80 mass% based on the rubber composition BB-1.

The rubber composition BB-1 can further contain, in addition to acrylonitrile-butadiene rubber, rubber other than acrylonitrile-butadiene rubber, a filler such as carbon black and silica, a plasticizer, zinc oxide, stearic acid, a vulcanization accelerator, a vulcanizing agent such as sulfur, a phenolic resin such as resorcin, a methylene donor such as hexamethylene tetramine, and the like.

The type and amount of the components can be appropriately selected.

The rubber composition BB-1 can be free of styrene-butadiene rubber.

### Vulcanized rubber layer B-2 containing styrene-butadiene rubber

A rubber composition BB-2 used in the vulcanized rubber layer B-2 containing styrene-butadiene rubber is not particularly limited as long as it is the rubber composition containing styrene-butadiene rubber. The rubber composition of the present invention is removed from the rubber composition BB-2.

### • Rubber composition BB-2 containing styrene-butadiene rubber

The rubber composition BB-2 is not particularly limited except that it contains styrene-butadiene rubber.

### • Styrene-butadiene rubber

The styrene-butadiene rubber contained in the rubber composition BB-2 is not particularly limited. Examples of the method include a known styrene-butadiene rubber.

### • Natural rubber, butadiene rubber

The rubber composition BB-2 can further contain rubber other than styrene-butadiene rubber as the rubber component. The rubber composition BB-2 preferably further contains natural rubber and/or butadiene rubber as the rubber component.

As the rubber components, the rubber composition BB-2 can contain, for example, styrene-butadiene rubber and natural rubber, or styrene-butadiene rubber, natural rubber, and butadiene rubber.

In the rubber composition BB-2, the styrene-butadiene rubber content is preferably from 10 to 100 mass% and more preferably 15 to 40 mass%, based on the rubber component in the rubber composition BB-2.

When the rubber composition BB-2 further contains natural rubber and butadiene rubber as the rubber components, the styrene-butadiene rubber content is preferably from 15 to 40 parts by mass based on the rubber component.

When the rubber composition BB-2 further contains natural rubber and butadiene rubber as the rubber components, the natural rubber content is preferably from 40 to 70 parts by mass based on the rubber component.

When the rubber composition BB-2 further contains natural rubber and butadiene rubber as the rubber components, the butadiene rubber content is preferably from 15 to 45 parts by mass based on the rubber component.

In the rubber composition BB-2, the rubber component content containing styrene-butadiene rubber is preferably from 50 to 80 mass% based on the rubber composition BB-2.

The rubber composition BB-2 can further contain a filler such as carbon black and silica, a plasticizer (including aroma oil), a tackifier such as C5 resin, zinc oxide, stearic acid, a vulcanization accelerator, a vulcanizing agent such as sulfur, and the like.

The type and amount of the components can be appropriately selected.

The rubber composition BB-2 can be free of acrylonitrile-butadiene rubber.

### Polyester fiber

The laminate of the present invention has polyester fibers as a reinforcing layer.

Polyester fiber is not particularly limited. Examples of the method include a known polyester fiber.

Examples of the material of the polyester fiber include polyethylene terephthalate (PET) and polyethylene naphthalate (PEN).

Examples of polyester fibers include continuous fiber reinforced materials (i.e., reinforcing materials of fibers having a sufficient length) and discontinuous fiber reinforced materials (i.e., short fibers; fibers usually having a length of 1 cm or less). The fiber reinforced material is preferably the continuous fiber reinforced material from the perspective of achieving excellent reinforcing properties of a rubber product of the rubber composition.

In the continuous fiber reinforced material, the fiber diameter, fiber length, form, and the like are not particularly limited as long as it is a continuous fiber reinforced material that can be generally used in a rubber product (for example, a marine hose or the like).

Examples of the forms of the continuous fiber reinforced material include an interdigital shape. Examples of the fiber reinforced material having an interdigital shape include one having a plurality of warp yarns arranged in parallel. The plurality of warp yarns may be a bundle (cord), and a plurality of the bundles may be arranged in parallel. In the plurality of bundles, the adjacent bundles may be in contact with each other, or the adjacent bundles may be apart from each other. A plurality of weft yarns may be incorporated so as to intersect the plurality of warp yarns (or the plurality of bundles).

The polyester fiber may be subjected to surface treatment. The surface treatment is not particularly limited. Examples thereof include known ones.

In the laminate of the present invention, when the vulcanized rubber layer A is adjacent to the vulcanized rubber layer B, the polyester fiber as the reinforcing layer is not particularly limited in the disposition in the laminate of the present invention.

In the vulcanized rubber layer B, the polyester fibers as the reinforcing layer are preferably stacked on the opposite side where the vulcanized rubber layer A is stacked.

Additionally, the polyester fibers as the reinforcing layer are preferably stacked with the vulcanized rubber layer B-2.

When the polyester fibers are stacked with the vulcanized rubber layer B-2, the polyester fibers may be arranged on the vulcanized rubber layer B-2 (vulcanized rubber layer B-2/polyester fibers), for example, or may be arranged between the vulcanized rubber layers B-2 adjacent to each other (vulcanized rubber layer B-2/polyester fibers/vulcanized rubber layer B-2).

When the polyester fibers are arranged between the vulcanized rubber layers B-2 adjacent to each other, the polyester fibers may be integrated with the vulcanized rubber layers B-2 adjacent to each other and embedded in (covered with) the vulcanized rubber layer B-2.

The vulcanized rubber layer A, the vulcanized rubber layers B-1 and B-2, and the reinforcing layer may be each a single layer or multiple layers.

In the laminate of the present invention, preferably, the vulcanized rubber layer B has the vulcanized rubber layer B-1 containing the acrylonitrile-butadiene rubber and the vulcanized rubber layer B-2 containing the styrene-butadiene rubber, and the vulcanized rubber layer B-1, the vulcanized rubber layer A, and the vulcanized rubber layer B-2 are stacked in this order.

In the above aspect, the vulcanized rubber layer B-1 is preferably adjacent to the vulcanized rubber layer A, and the vulcanized rubber layer A is preferably adjacent to the vulcanized rubber layer B-2.

In the above aspect, the polyester fiber as the reinforcing layer can be the same as described above. In particular, the polyester fibers are preferably stacked with the vulcanized rubber layer B-2, and are more preferably arranged between the vulcanized rubber layers B-2 adjacent to each other.

As a method of producing the laminate of the present invention, for example, the rubber composition of the present invention is overlaid on the rubber composition BB-1 containing acrylonitrile-butadiene rubber, the rubber composition BB-2 containing styrene-butadiene rubber is overlaid on the rubber composition of the present invention, polyester fibers are overlaid thereon, and another rubber composition BB-2 is further overlaid thereon to form an unvulcanized laminate. The laminate of the present invention can be produced by vulcanizing the unvulcanized laminate under conditions of, for example, from 50 to 150°C. After vulcanization, the rubber composition BB-1 becomes the vulcanized rubber layer B-1, the rubber composition of the present invention becomes the vulcanized rubber layer A, and the rubber composition BB-2 becomes the vulcanized rubber layer B-2.

In the above case, the vulcanized rubber layer B-1 may be adjacent to the vulcanized rubber layer A, and the vulcanized rubber layer A may be adjacent to the vulcanized rubber layer B-2.

Furthermore, in the above case, the rubber composition BB-2 on the rubber composition of the present invention, polyester fibers thereon, and the rubber composition BB-2 thereon may be integrated after vulcanization, and the polyester fibers may be embedded in (covered with) the vulcanized rubber layer B-2.

### Marine hose

The marine hose of the present invention is a marine hose formed using the rubber composition of the present invention.

The rubber composition used in the marine hose of the present invention is not particularly limited as long as it is the rubber composition of the present invention.

In the marine hose, constituent members using the rubber composition of the present invention are not particularly limited.

In the marine hose of the present invention, an example of a preferable aspect is a marine hose in which an innermost layer, an interlayer adhesive layer, and a carcass layer are stacked in this order,
the innermost layer is a vulcanized rubber layer containing acrylonitrile-butadiene rubber,
the interlayer adhesive layer is a vulcanized rubber layer formed using the rubber composition of the present invention, and
the carcass layer includes a vulcanized rubber layer containing styrene-butadiene rubber and a polyester fiber.

The innermost layer, the interlayer adhesive layer, and the carcass layer may each independently be a single layer or multiple layers.

### Innermost layer

In the marine hose of the present invention, the innermost layer is a vulcanized rubber layer containing acrylonitrile-butadiene rubber.

The vulcanized rubber layer containing acrylonitrile-butadiene rubber as the innermost layer is the same as the vulcanized rubber layer B-1 containing acrylonitrile-butadiene rubber in the laminate of the present invention.

The thickness of the innermost layer (as a whole) can be typically from 1.5 to 8.0 mm.

### Interlayer adhesive layer

In the marine hose of the present invention, the interlayer adhesive layer is a vulcanized rubber layer formed by using the rubber composition of the present invention.

The interlayer adhesive layer is the same as the vulcanized rubber layer A in the laminate of the present invention.

The thickness of the interlayer adhesive layer (as a whole) can be typically from 0.5 to 2.0 mm.

### Carcass layer

In the marine hose of the present invention, the carcass layer includes a vulcanized rubber layer containing styrene-butadiene rubber and polyester fibers.

The vulcanized rubber layer containing styrene-butadiene rubber of the carcass layer is the same as the vulcanized rubber layer B-2 containing styrene-butadiene rubber in the laminate of the present invention.

The polyester fibers of the carcass layer are the same as the polyester fibers as the reinforcing layer in the laminate of the present invention.

The thickness of the carcass layer (single layer) can be typically from 1.0 to 3.0 mm.

As the marine hose of the present invention, an example of a preferable aspect is one in which the innermost layer is adjacent to the interlayer adhesive layer and the interlayer adhesive layer is adjacent to the vulcanized rubber layer containing the styrene-butadiene rubber of the carcass layer.

### Outer layer

The marine hose of the present invention may further have an outer layer on the carcass layer.

The outer layer is not particularly limited. The outer layer can be, for example, a rubber layer. Examples of the rubber contained in the outer layer include natural rubber and/or synthetic rubber.

The thickness of the outer layer can be, for example, from 2.0 to 10.0 mm.

The marine hose of the present invention may have another layer between the carcass layer and the outer layer. The other layer is not particularly limited as long as the marine hose is a layer that can be usually provided between the carcass layer and the outer layer. Examples thereof include a metal layer (e.g., a layer in which a wire-shaped metal is wound spirally), and a rubber layer for maintaining the shape of the marine hose. The metal layer is not particularly limited. Examples of the method include a known metal layer. The same applies to the rubber layer for maintaining the shape of the marine hose.

### Size of marine hose

An inner diameter of the marine hose of the present invention is not particularly limited. For example, the inner diameter can be from 10 to 30 inches.

A length of the marine hose of the present invention is not particularly limited. For example, the length can be from 5 to 20 meters.

### Marine hose producing method

As a method of producing the marine hose of the present invention, for example, first, a sheet of a rubber composition containing acrylonitrile-butadiene rubber for an innermost layer is wound around a mandrel, and a sheet of the composition of the present invention is wound thereon. A method of winding the sheet of the composition of the present invention around the mandrel is not particularly limited, and examples thereof include a method of winding the sheet (e.g., spirally) while the sheets are partially overlapped Next, for a carcass layer, a sheet in which polyester fibers are covered with a rubber composition containing styrene-butadiene rubber is wound on the sheet of the composition of the present invention. Next, a metal wire is wound spirally on the sheet for the carcass, a rubber layer composition for maintaining the shape of the marine hose is stacked thereon, and finally the sheet of the rubber composition for the outer layer is stacked.

By vulcanizing the laminate obtained as described above, for example, the marine hose in which the interlayer adhesive layer is formed using the composition of the present invention can be produced.

Since the marine hose is generally large, an example of a preferable aspect is one in which for example when the laminate is vulcanized, at an initial stage, the laminate is heated for from 1 to 1.5 hours at a temperature in the range of, for example, from 100 to 110°C, and thereafter, the laminate is heated under conditions of from 130 to 147°C to complete vulcanization and the like.

As described above, in the marine hose produced by stacking the rubber composition of the present invention on the rubber composition containing acrylonitrile-butadiene rubber for the innermost layer, stacking, for the carcass layer, the rubber composition covering polyester fibers and containing styrene-butadiene rubber on the rubber composition of the present invention, and stacking another layer as necessary to, for example, vulcanize the laminate, the innermost layer and the carcass layer can be adhered by the interlayer adhesive layer formed using the composition of the present invention.

Since the rubber composition of the present invention has excellent strength of the cured product to be obtained from the rubber composition, a marine hose having excellent durability can be produced when the rubber composition of the present invention is used as a rubber that constitutes the interlayer adhesive layer of the marine hose.

### Examples

An embodiment of the present invention will be described below in detail by way of examples. However, an embodiment of the present invention is not limited to such examples.

### Production of the rubber composition

The components shown in Table 1 below were used in compositions (part by mass) shown in the same table. First, of the components shown in Table 1 below, components other than sulfur, vulcanization accelerators such as sulfenamide-based vulcanization accelerators, hexamine, and melamine compounds were mixed in a 1.5 liter sealed mixer for 5 minutes under conditions of 100°C to obtain a master batch. Next, sulfur, a vulcanization accelerator such as a sulfenamide-based vulcanization accelerator, hexamine, and a melamine compound were added to the obtained master batch in the amounts (parts by mass) shown in Table 1 below, and these components were mixed with an open roll under conditions of 50°C to obtain a rubber composition.

### Preparation of rubber sheet X

A rubber sheet X having a thickness of 3.0 mm was obtained in an unvulcanized state using each rubber composition produced as described above.

**[Table 1-1]**

| Table 1 | | Comparative Example 1 | Comparative Example 2 | Example 1 | Example 2 |
|---|---|---|---|---|---|
| SBR | Tufdene 2000R | 40 | 40 | 40 | 40 |
| | (Asahi Kasei Corporation) | | | | |
| NBR | Nipol DN 401 | | 60 | 60 | 60 |
| | (Zeon Corporation) | | | | |
| NR | STR-20 | 60 | | | |
| | (TECK BEE HANG CO., LTD.) | | | | |
| Mixture of vinyl chloride resin and plasticizer | Poppylon R#0715-1 | | 20 | 20 | |
| | (Poppylon Kasei Co., Ltd) | | | | |
| Carbon black | Asahi Thermal | 60 | 60 | 60 | 60 |
| | (Asahi Carbon Co., Ltd.) | | | | |
| Silica | Nipsil AQ | 20 | 20 | 20 | 20 |
| | (Tosoh Silica Corporation) | | | | |
| Zinc oxide | Zinc Oxide III | 5 | 5 | 5 | 5 |
| | (Seido Chemical Industry Co., | | | | |
| | Ltd.) | | | | |
| Stearic acid | Stearic acid YR | 1 | 1 | 1 | 1 |
| | (NOF CORPORATION) | | | | |
| Resorcinol resin | Resorcinol | 2.5 | 2.5 | 2.5 | 2.5 |
| | (Sumitomo Chemical Co., Ltd.) | | | | |
| Aromatic oil | A-OMIX | 5 | 5 | 5 | 5 |
| | (Sankyo Yuka Kogyo K. K.) | | | | |
| Sulfur | Oil-treated sulfur | 2.5 | 2.5 | 2.5 | 2.5 |
| | (Hosoi Chemical Industry. Co., Ltd.) | | | | |
| Sulfenamide-based vulcanization accelerator | NOCCELER NS-P | 0.8 | 0.8 | 0.8 | 0.8 |
| | (Ouchi Shinko Chemical Industrial Co., Ltd) | | | | |
| Hexamine | Sanceler HT-PO | 1.78 | 1.78 | | |
| | (Sanshin Chemical Industry Co., Ltd.) | | | | |
| Melamine compound 1 | Sumikanol 507AP | | | | |
| | (BARA CHEMICAL CO., LTD.) | | | | |
| Melamine compound 2 | Cyrez 964RPC | | | 2.74 | 2.74 |
| | (ALLnex USA Inc.) | | | | |
| Coumarone resin | Soft coumarone 25B | 8 | 8 | 8 | 8 |
| | (Kobe Oil Chemical Ind. Co., Ltd.) | | | | |
| Phenolic resin (Alkylphenol resin) | PP 5121 | 3 | 3 | 3 | 3 |
| | (Gunei Chemical Industry Co., Ltd.) | | | | |
| Melamine compound (net) or hexamine/resorcinol resin (mass ratio) | | 0.71 | 0.71 | 1.10 | 1.10 |
| Resorcinol resin content based on 100 parts by mass of NBR (mass ratio) | | | 4.17 | 4.17 | 4.17 |
| Melamine compound content (net) based on 100 parts by mass of NBR (mass ratio) | | | | 4.57 | 4.57 |
| Cresol resin | Sumikanol 610 (Taoka Chemical Co., Ltd.) | | | | |
| Thiazole-based vulcanization accelerator (Di-2-benzothiazolyl disulfide) | NOCCELER DM-P (Ouchi Shinko Chemical Industrial Co., Ltd) | | | | |
| Adhesiveness to vulcanized rubber layer B-1 containing NBR | Laminate XY | Poor | Good | Good | Good |
| | 148°C × 60 min press | | | | |
| Adhesiveness to vulcanized rubber layer B-2 containing SBR (N/mm) | Laminate XZ | 3.4 | 3.4 | 6.2 | 7.5 |
| | 148°C × 200 min steam | | | | |
| TB (Mpa) | 148°C × 60 min press | 16.4 | 12.3 | 7.2 | 8.9 |
| Strength [EB (%)] of cured product | 148°C × 60 min press | 607 | 374 | 565 | 731 |

**[Table 1-2]**

| Table 1 | | Comparative Example 3 | Comparative Example 4 | Comparative Example 5 | Example 3 | Example 4 |
|---|---|---|---|---|---|---|
| SBR | Tufdene 2000R | 40 | 40 | 80 | 50 | 30 |
| | (Asahi Kasei Corporation) | | | | | |
| NBR | Nipol DN 401 | 60 | 60 | 20 | 50 | 70 |
| | (Zeon Corporation) | | | | | |
| NR | STR-20 | | | | | |
| | (TECK BEE HANG CO., LTD.) | | | | | |
| Mixture of vinyl chloride resin and plasticizer | Poppylon R#0715-1 | | | | | |
| | (Poppylon Kasei Co., Ltd) | | | | | |
| Carbon black | Asahi Thermal | 60 | 60 | 60 | 60 | 60 |
| | (Asahi Carbon Co., Ltd.) | | | | | |
| Silica | Nipsil AQ | 20 | 20 | 20 | 20 | 20 |
| | (Tosoh Silica Corporation) | | | | | |
| Zinc oxide | Zinc Oxide III | 5 | 5 | 5 | 5 | 5 |
| | (Seido Chemical Industry Co., Ltd.) | | | | | |
| Stearic acid | Stearic acid YR | 1 | 1 | 1 | 1 | 1 |
| | (NOF CORPORATION) | | | | | |
| Resorcinol resin | Resorcinol | 2.5 | 2.5 | 2.5 | 2.5 | 2.5 |
| | (Sumitomo Chemical Co., Ltd.) | | | | | |
| Aromatic oil | A-OMIX | 5 | 5 | 5 | 5 | 5 |
| | (Sankyo Yuka Kogyo K. K.) | | | | | |
| Sulfur | Oil-treated sulfur | 2.5 | 2.5 | 2.5 | 2.5 | 2.5 |
| | (Hosoi Chemical Industry. Co., Ltd.) | | | | | |
| Sulfenamide-based vulcanization accelerator | NOCCELER NS-P | 0.8 | 0.8 | 0.8 | 0.8 | 0.8 |
| | (Ouchi Shinko Chemical Industrial Co., Ltd) | | | | | |
| Hexamine | Sanceler HT-PO | | 1.78 | | | |
| | (Sanshin Chemical Industry Co., Ltd.) | | | | | |
| Melamine compound 1 | Sumikanol 507AP | | | | | |
| | (BARA CHEMICAL CO., LTD.) | | | | | |
| Melamine compound 2 | Cyrez 964RPC | | | 2.74 | 2.74 | 2.74 |
| | (ALLnex USA Inc.) | | | | | |
| Coumarone resin | Soft coumarone 25B (Kobe Oil Chemical Ind. Co., Ltd.) | 8 | 8 | 8 | 8 | 8 |
| Phenolic resin (Alky lphenol resin) | PP 5121 | 3 | 3 | 3 | 3 | 3 |
| | (Gunei Chemical Industry Co., Ltd.) | | | | | |
| Melamine compound (net) or hexamine/resorcinol resin (mass ratio) | | | 0.71 | 1.10 | 1.10 | 1.10 |
| Resorcinol resin content based on 100 parts by mass of NBR (mass ratio) | | 4.17 | 4.17 | 12.50 | 5.00 | 3.57 |
| Melamine compound content (net) based on 100 parts by mass of NBR (mass ratio) | | | | 13.70 | 5.48 | 3.91 |
| Cresol resin | Sumikanol 610 | | | | | |
| | (Taoka Chemical Co., Ltd.) | | | | | |
| Thiazole-based vulcanization accelerator (Di-2-benzothiazolyl disulfide) | NOCCELER DM-P (Ouchi Shinko Chemical Industrial Co., Ltd) | | | | | |
| Adhesiveness to vulcanized rubber layer B-1 containing NBR | Laminate XY | Poor | Good | Poor | Good | Good |
| | 148°C × 60 min press | | | | | |
| Adhesiveness to vulcanized rubber layer B-2 containing SBR (N/mm) | Laminate XZ | 6.1 | 4.9 | 7.8 | 7.6 | 6.8 |
| | 148°C × 200 min steam | | | | | |
| TB (Mpa) | 148°C × 60 min press | 11.0 | 15.3 | 7.8 | 8.9 | 10.0 |
| Strength [EB (%)] of cured product | 148°C × 60 min press | 931 | 484 | 650 | 720 | 798 |

**[Table 2-1]**

| Table 1-continued | | Comparative Example 6 | Comparative Example 7 | Comparative Example 8 | Comparative Example 9 |
|---|---|---|---|---|---|
| SBR | Tufdene 2000R | 10 | 50 | 30 | 40 |
| | (Asahi Kasei Corporation) | | | | |
| NBR | Nipol DN 401 | 90 | 50 | 70 | 60 |
| | (Zeon Corporation) | | | | |
| NR | STR-20 | | | | |
| | (TECK BEE HANG CO., LTD.) | | | | |
| Mixture of vinyl chloride resin and plasticizer | Poppylon R#0715-1 | | | | |
| | (Poppylon Kasei Co., Ltd) | | | | |
| Carbon black | Asahi Thermal | 60 | 60 | 60 | 60 |
| | (Asahi Carbon Co., Ltd.) | | | | |
| Silica | Nipsil AQ | 20 | 20 | 20 | |
| | (Tosoh Silica Corporation) | | | | |
| Zinc oxide | Zinc Oxide III | 5 | 5 | 5 | 5 |
| | (Seido Chemical Industry Co., Ltd.) | | | | |
| Stearic acid | Stearic acid YR | 1 | 1 | 1 | 1 |
| | (NOF CORPORATION) | | | | |
| Resorcinol resin | Resorcinol | 2.5 | 2.5 | 2.5 | 2.5 |
| | (Sumitomo Chemical Co., Ltd.) | | | | |
| Aromatic oil | A-OMIX | 5 | 5 | 5 | 5 |
| | (Sankyo Yuka Kogyo K. K.) | | | | |
| Sulfur | Oil-treated sulfur | 2.5 | 2.5 | 2.5 | 2.5 |
| | (Hosoi Chemical Industry. Co., Ltd.) | | | | |
| Sulfenamide-based vulcanization accelerator | NOCCELER NS-P | 0.8 | 0.8 | 0.8 | 0.8 |
| | (Ouchi Shinko Chemical Industrial Co., Ltd) | | | | |
| Hexamine | Sanceler HT-PO | | 1.78 | 1.78 | |
| | (Sanshin Chemical Industry Co., Ltd.) | | | | |
| Melamine compound 1 | Sumikanol 507AP | | | | |
| | (BARA CHEMICAL CO., LTD.) | | | | |
| Melamine compound 2 | Cyrez 964RPC | 2.74 | | | 2.74 |
| | (ALLnex USA Inc.) | | | | |
| Coumarone resin | Soft coumarone 25B | 8 | 8 | 8 | 8 |
| | (Kobe Oil Chemical Ind. Co., Ltd.) | | | | |
| Phenolic resin (Alkylphenol resin) | PP 5121 | 3 | 3 | 3 | 3 |
| | (Gunei Chemical Industry Co., Ltd.) | | | | |
| Melamine compound (net) or hexamine/resorcinol resin (mass ratio) | | 1.10 | 0.71 | 0.71 | |
| Resorcinol resin content based on 100 parts by mass of NBR (mass ratio) | | 2.78 | 5.00 | 3.57 | 0.71 |
| Melamine compound content (net) based on 100 parts by mass of NBR (mass ratio) | | 3.04 | | | |
| Cresol resin | Sumikanol 610 | | | | |
| | (Taoka Chemical Co., Ltd.) | | | | |
| Thiazole-based vulcanization accelerator (Di-2-benzothiazolyl disulfide) | NOCCELER DM-P (Ouchi Shinko Chemical Industrial Co., Ltd) | | | | |
| Adhesiveness to vulcanized rubber layer B-1 containing NBR | Laminate XY | Good | Good | Good | Good |
| | 148°C × 60 min press | | | | |
| Adhesiveness to vulcanized rubber layer B-2 containing SBR (N/mm) | Laminate XZ | 5.4 | 3.9 | 4.4 | 10.0 |
| | 148°C × 200 min steam | | | | |
| TB (Mpa) | 148°C × 60 min press | 11.2 | 15.3 | 17.1 | 8.4 |
| Strength [EB (%)] of cured product | 148°C × 60 min press | 800 | 499 | 529 | 356 |

**[Table 2-2]**

| Table 1-continued | | Example 5 | Example 6 | Example 7 | Example 8 | Example 9 |
|---|---|---|---|---|---|---|
| SBR | Tufdene 2000R | 40 | 40 | 40 | 40 | 40 |
| | (Asahi Kasei Corporation) | | | | | |
| NBR | Nipol DN 401 | 60 | 60 | 60 | 60 | 60 |
| | (Zeon Corporation) | | | | | |
| NR | STR-20 | | | | | |
| | (TECK BEE HANG CO., LTD.) | | | | | |
| Mixture of vinyl chloride resin and plasticizer | Poppylon R#0715-1 (Poppylon Kasei Co., Ltd) | | | | | |
| Carbon black | Asahi Thermal | 60 | 60 | 60 | 60 | 60 |
| | (Asahi Carbon Co., Ltd.) | | | | | |
| Silica | Nipsil AQ | 20 | 20 | 20 | 42 | 20 |
| | (Tosoh Silica Corporation) | | | | | |
| Zinc oxide | Zinc Oxide III | 5 | 5 | 5 | 5 | 5 |
| | (Seido Chemical Industry Co., Ltd.) | | | | | |
| Stearic acid | Stearic acid YR | 1 | 1 | 1 | 1 | 1 |
| | (NOF CORPORATION) | | | | | |
| Resorcinol resin | Resorcinol | 2.5 | 2.5 | 2.5 | 2.5 | 2.5 |
| | (Sumitomo Chemical Co., Ltd.) | | | | | |
| Aromatic oil | A-OMIX | 5 | 5 | 5 | 5 | 5 |
| | (Sankyo Yuka Kogyo K. K.) | | | | | |
| Sulfur | Oil-treated sulfur | 2.5 | 2.5 | 2.5 | 2.5 | 2.5 |
| | (Hosoi Chemical Industry. Co., Ltd.) | | | | | |
| Sulfenamide-based vulcanization accelerator | NOCCELER NS-P | 1 | 1.2 | 1.3 | 0.8 | 0.8 |
| | (Ouchi Shinko Chemical Industrial Co., Ltd) | | | | | |
| Hexamine | Sanceler HT-PO | | | | | |
| | (Sanshin Chemical Industry Co., Ltd.) | | | | | |
| Melamine compound 1 | Sumikanol 507AP | | | | | |
| | (BARA CHEMICAL CO., LTD.) | | | | | |
| Melamine compound 2 | Cyrez 964RPC | 2.74 | 2.74 | 2.74 | 2.74 | 1.97 |
| | (ALLnex USA Inc.) | | | | | |
| Coumarone resin | Soft coumarone 25B | 8 | 8 | 8 | 8 | 8 |
| | (Kobe Oil Chemical Ind. Co., Ltd.) | | | | | |
| Phenolic resin (Alkylphenol resin) | PP 5121 | 3 | 3 | 3 | 3 | 3 |
| | (Gunei Chemical Industry Co., Ltd.) | | | | | |
| Melamine compound (net) or hexamine/resorcinol resin (mass ratio) | | 1.10 | 1.10 | 1.10 | 1.10 | 0.79 |
| Resorcinol resin content based on 100 parts by mass of NBR (mass ratio) | | 4.17 | 4.17 | 4.17 | 4.17 | 4.17 |
| Melamine compound content (net) based on 100 parts by mass of NBR (mass ratio) | | 4.57 | 4.57 | 4.57 | 4.57 | 3.28 |
| Cresol resin | Sumikanol 610 | | | | | |
| | (Taoka Chemical Co., Ltd.) | | | | | |
| Thiazole-based vulcanization accelerator (Di-2-benzothiazolyl disulfide) | NOCCELER DM-P (Ouchi Shinko Chemical Industrial Co., Ltd) | | | | | |
| Adhesiveness to vulcanized rubber layer B-1 containing NBR | Laminate XY | Good | Good | Good | Good | Good |
| | 148°C × 60 min press | | | | | |
| Adhesiveness to vulcanized rubber layer B-2 containing SBR (N/mm) | Laminate XZ | 7.2 | 6.4 | 6.2 | 7.5 | 7.3 |
| | 148°C × 200 min steam | | | | | |
| TB (Mpa) | 148°C × 60 min press | 9.8 | 10.8 | 11.4 | 5.0 | 10.1 |
| Strength [EB (%)] of cured product | 148°C × 60 min press | 617 | 516 | 450 | 980 | 879 |

**[Table 3-1]**

| Table 1-continued | | Example 10 | Example 11 | Example 12 | Comparative Example 10 | Comparative Example 11 |
|---|---|---|---|---|---|---|
| SBR | Tufdene 2000R | 40 | 40 | 40 | 40 | 40 |
| | (Asahi Kasei Corporation) | | | | | |
| NBR | Nipol DN 401 | 60 | 60 | 60 | | |
| | (Zeon Corporation) | | | | | |
| NR | STR-20 | | | | 60 | 60 |
| | (TECK BEE HANG CO., LTD.) | | | | | |
| Mixture of vinyl chloride resin and plasticizer | Poppylon R#0715-1 | | | | | |
| | (Poppylon Kasei Co., Ltd) | | | | | |
| Carbon black | Asahi Thermal | 60 | 60 | 60 | 60 | 60 |
| | (Asahi Carbon Co., Ltd.) | | | | | |
| Silica | Nipsil AQ | 20 | 20 | 20 | 20 | 20 |
| | (Tosoh Silica Corporation) | | | | | |
| Zinc oxide | Zinc Oxide III | 5 | 5 | 5 | 5 | 5 |
| | (Seido Chemical Industry Co., Ltd.) | | | | | |
| Stearic acid | Stearic acid YR | 1 | 1 | 1 | 1 | 1 |
| | (NOF CORPORATION) | | | | | |
| Resorcinol resin | Resorcinol | 2.5 | 2.5 | 2.5 | 2.5 | |
| | (Sumitomo Chemical Co., Ltd.) | | | | | |
| Aromatic oil | A-OMIX | 5 | 5 | 5 | 5 | 5 |
| | (Sankyo Yuka Kogyo K. K.) | | | | | |
| Sulfur | Oil-treated sulfur | 2.5 | 2.5 | 2.5 | 2.5 | 2.5 |
| | (Hosoi Chemical Industry. Co., Ltd.) | | | | | |
| Sulfenamide-based vulcanization accelerator | NOCCELER NS-P | 0.8 | 0.8 | 0.8 | 0.8 | 0.8 |
| | (Ouchi Shinko Chemical Industrial Co., Ltd) | | | | | |
| Hexamine | Sanceler HT-PO | | | | | |
| | (Sanshin Chemical Industry Co., Ltd.) | | | | | |
| Melamine compound 1 | Sumikanol 507AP | | | 2.74 | | |
| | (BARA CHEMICAL CO., LTD.) | | | | | |
| Melamine compound 2 | Cyrez 964RPC | 3.51 | 7.02 | | 2.74 | 2.74 |
| | (ALLnex USA Inc.) | | | | | |
| Coumarone resin | Soft coumarone 25B | 8 | 8 | 8 | 8 | 8 |
| | (Kobe Oil Chemical Ind. Co., Ltd.) | | | | | |
| Phenolic resin (Alkylphenol resin) | PP 5121 | 3 | 3 | 3 | 3 | 3 |
| | (Gunei Chemical Industry Co., Ltd.) | | | | | |
| Melamine compound (net) or hexamine/resorcinol resin (mass ratio) | | 1.40 | 2.81 | 1.10 | 1.10 | |
| Resorcinol resin content based on 100 parts by mass of NBR (mass ratio) | | 4.17 | 4.17 | 4.17 | | |
| Melamine compound content (net) based on 100 parts by mass of NBR (mass ratio) | | 5.85 | 11.70 | 4.57 | | |
| Cresol resin | Sumikanol 610 | | | | | 2.5 |
| | (Taoka Chemical Co., Ltd.) | | | | | |
| Thiazole-based vulcanization accelerator (Di-2-benzothiazolyl disulfide) | NOCCELER DM-P | | | | | |
| | (Ouchi Shinko Chemical Industrial Co., Ltd) | | | | | |
| Adhesiveness to vulcanized rubber layer B-1 containing NBR | Laminate XY | Good | Good | Good | Poor | Poor |
| | 148°C × 60 min press | | | | | |
| Adhesiveness to vulcanized rubber layer B-2 containing SBR (N/mm) | Laminate XZ | 7.2 | 7.1 | 6.8 | 8.0 | 7.2 |
| | 148°C × 200 min steam | | | | | |
| TB (Mpa) | 148°C × 60 min press | 8.3 | 5.9 | 11.7 | 10.5 | 9.7 |
| Strength [EB (%)] of cured product | 148°C × 60 min press | 643 | 407 | 513 | 774 | 830 |

**[Table 3-2]**

| Table 1-continued | | Comparative Example 12 | Comparative Example 13 | Example 13 | Example 14 |
|---|---|---|---|---|---|
| SBR | Tufdene 2000R | 40 | 40 | 40 | 40 |
| | (Asahi Kasei Corporation) | | | | |
| NBR | Nipol DN 401 | | | 60 | 60 |
| | (Zeon Corporation) | | | | |
| NR | STR-20 | 60 | 60 | | |
| | (TECK BEE HANG CO., LTD.) | | | | |
| Mixture of vinyl chloride resin and plasticizer | Poppylon R#0715-1 | | | | |
| | (Poppylon Kasei Co., Ltd) | | | | |
| Carbon black | Asahi Thermal | 60 | 60 | 60 | 60 |
| | (Asahi Carbon Co., Ltd.) | | | | |
| Silica | Nipsil AQ | 20 | 20 | 20 | 20 |
| | (Tosoh Silica Corporation) | | | | |
| Zinc oxide | Zinc Oxide III | 5 | 5 | 5 | 5 |
| | (Seido Chemical Industry Co., Ltd.) | | | | |
| Stearic acid | Stearic acid YR | 1 | 1 | 1 | 1 |
| | (NOF CORPORATION) | | | | |
| Resorcinol resin | Resorcinol | 2.5 | 2.5 | 2.5 | 2.5 |
| | (Sumitomo Chemical Co., Ltd.) | | | | |
| Aromatic oil | A-OMIX | 5 | 5 | 5 | 5 |
| | (Sankyo Yuka Kogyo K. K.) | | | | |
| Sulfur | Oil-treated sulfur | 2.5 | 2.5 | 2.5 | 2.5 |
| | (Hosoi Chemical Industry. Co., Ltd.) | | | | |
| Sulfenamide-based vulcanization accelerator | NOCCELER NS-P | 0.8 | | | 0.8 |
| | (Ouchi Shinko Chemical Industrial Co., Ltd) | | | | |
| Hexamine | Sanceler HT-PO | | | | |
| | (Sanshin Chemical Industry Co., Ltd.) | | | | |
| Melamine compound 1 | Sumikanol 507AP | | | | |
| | (BARA CHEMICAL CO., LTD.) | | | | |
| Melamine compound 2 | Cyrez 964RPC | | 2.74 | 2.74 | 2.74 |
| | (ALLnex USA Inc.) | | | | |
| Coumarone resin | Soft coumarone 25B | 8 | 8 | 8 | |
| | (Kobe Oil Chemical Ind. Co., Ltd.) | | | | |
| Phenolic resin (Alky lphenol resin) | PP 5121 | 3 | 3 | 3 | |
| | (Gunei Chemical Industry Co., Ltd.) | | | | |
| Melamine compound (net) or hexamine/resorcinol resin (mass ratio) | | | 1.10 | 1.10 | 1.10 |
| Resorcinol resin content based on 100 parts by mass of NBR (mass ratio) | | | | 4.17 | 4.17 |
| Melamine compound content (net) based on 100 parts by mass of NBR (mass ratio) | | | | 2.97 | 4.57 |
| Cresol resin | Sumikanol 610 | | | | |
| | (Taoka Chemical Co., Ltd.) | | | | |
| Thiazole-based vulcanization accelerator (Di-2-benzothiazolyl disulfide) | NOCCELER DM-P (Ouchi Shinko Chemical Industrial Co., Ltd) | | 0.8 | 0.8 | |
| Adhesiveness to vulcanized rubber layer B-1 containing NBR | Laminate XY | Poor | Poor | Good | Good |
| | 148°C × 60 min press | | | | |
| Adhesiveness to vulcanized rubber layer B-2 containing SBR (N/mm) | Laminate XZ | 6.5 | 8.3 | 7.8 | 7.5 |
| | 148°C × 200 min steam | | | | |
| TB (Mpa) | 148°C × 60 min press | 12.9 | 9.0 | 7.7 | 10.0 |
| Strength [EB (%)] of cured product | 148°C × 60 min press | 985 | 844 | 798 | 700 |

Details of each component indicated in Table 1 are as follows.
- SBR: Styrene-butadiene copolymer. Tufdene 2000R (Asahi Kasei Corporation). Weight average molecular weight: 320000, styrene amount: 25 mass%
- NBR: acrylonitrile-butadiene copolymer. Nipol DN 401 (Zeon Corporation). AN amount 18.0 mass%. Mooney viscosity 78. Not a hydrogen additive.
- NR: Natural rubber. STR20 (TECK BEE HANG Co., Ltd.)
- Mixture of vinyl chloride resin and plasticizer: Poppylon R#0715-1 (Poppylon Kasei Co., Ltd)
   Carbon black: Asahi Thermal (Asahi Carbon Co., Ltd.), nitrogen adsorption specific surface area 24 m²/g, dibutyl phthalate oil absorption 28 ml/100 g. Carbon black of FT grade
- Silica: Nipsil AQ (Tosoh Silica Corporation) pH 6.4
- Zinc oxide: Zinc Oxide III (Seido Chemical Industry Co., Ltd.)
- Stearic acid: Stearic acid YR (NOF CORPORATION)
- Resorcinol resin: Resorcinol (Sumitomo Chemical Co., Ltd.). condensate of resorcin (1,3-benzenediol) and formaldehyde
- Aromatic oil: A-OMIX (Sankyo Yuka Kogyo K.K.)
- Sulfur: Oil treatment sulfur (Hosoi Chemical Industry Co., Ltd.)
- Sulfenamide-based vulcanization accelerator: NOCCELER NS-P (Ouchi Shinko Chemical Industrial Co., Ltd). N-tert-butyl-2-benzothiazolylsulfenamide
- Hexamine: Hexamethylene tetramine (the following structure). Sanceler HT-PO (Sanshin Chemical Industry Co., Ltd.) 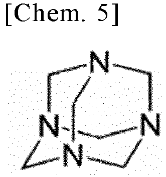
- Melamine compound 1: Sumikanol 507AP (Bara Chemical Co., Ltd.). Compounds having the following structure (hexamethylol melamine pentamethyl ether), dimer and oligomer thereof, and mixture of silica and plasticizer.

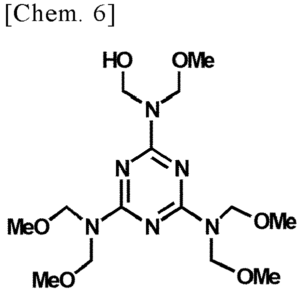

In the melamine compound 1, the net melamine compound content (hexamethylol melamine pentamethyl ether, dimer and oligomer thereof) is 65 mass%.

The numerical value indicated in the "Melamine compound 1" column is the amount as the mixture.

When the amount of the melamine compound 1 (the amount as the mixture) is 2.74 parts by mass (Example 12), the total amount of the silica and plasticizer in the melamine compound 1 used is about 1.0 part by mass Thus, in Example 12, silica is contained with a total amount of greater than 20 parts by mass and less than 21.0 parts by mass.
- Melamine Compound 2: Cyrez 964RPC (ALLnex USA Inc.). Compound having the following structure (hexamethylol melamine pentamethyl ether) and/or a condensate thereof. 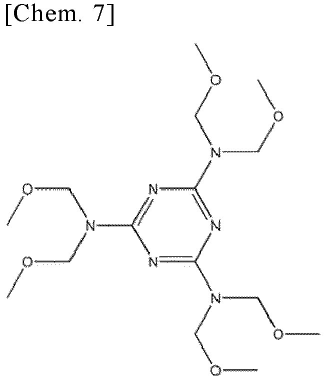
- Coumarone resin: soft coumarone 25B (Kobe Oil Chemical Ind. Co., Ltd.)
- Phenol resin (alkylphenol resin): condensate of alkylphenol and formaldehyde. PP5121 (Gunei Chemical Industry Co., Ltd.)

### (Preparation of rubber composition for vulcanized rubber layer B-1 containing NBR)

The components shown in Table 2 below were used in compositions (part by mass) shown in the same table. First, of the components shown in Table 2 below, components other than sulfur, vulcanization accelerators, and hexamine were mixed in a 1.5 liter sealed mixer for 5 minutes under conditions of 100°C to obtain a master batch. Next, sulfur, a vulcanization accelerator, and hexamine were added to the obtained master batch in the amounts (parts by mass) shown in Table 2 below, and these components were mixed with an open roll under conditions of 50°C to obtain a rubber composition for the vulcanized rubber layer B-1 containing NBR.

**[Table 4]**

| Table 2 | Part by mass |
|---|---|
| Rubber composition for vulcanized rubber layer B-1 containing NBR | |
| NBR (acrylonitrile-butadiene rubber) | 100 |
| Nipol DN00M (Zeon Corporation) An amount: 45 mass% | |
| FT carbon black | 90 |
| Asahi Thermal (Asahi Carbon Co., Ltd.) | |
| Silica | 30 |
| Nipsil AQ (Tosoh Silica Corporation) | |
| Plasticizer | 15 |
| DINP (Joy Plus Co., Ltd.) | |
| Zinc oxide | 5 |
| Zinc Oxide III (Seido Chemical Industry Co., Ltd.) | |
| Stearic acid | 2 |
| Stearic acid YR (NOF CORPORATION) | |
| Vulcanization accelerator (N-cyclohexyl-2-benzothiazolyl sulfenamide) | 1.25 |
| NOCCELLER CZ-G (Ouchi Shinko Chemical Industrial Co., Ltd.) | |
| Hexamine | 1 |
| Sanceler HT-PO (Sanshin Chemical Industry Co., Ltd.) | |
| Sulfur | 1.5 |
| Oil Treated Sulfur (Hosoi Chemical Industry Co., Ltd.) | |
| Resorcin | 2.5 |
| RESORCINOL (Sumitomo Chemical Co., Ltd.) | |

### Preparation of rubber sheet Y

A rubber sheet Y having a thickness of 3.0 mm was obtained in an unvulcanized state using the rubber composition for the vulcanized rubber layer B-1 prepared as described above.

### Preparation of rubber composition for vulcanized rubber layer B-2 containing SBR

The components shown in Table 3 below were used in compositions (part by mass) shown in the same table. First, of the components shown in Table 3 below, components other than sulfur and a vulcanization accelerator DM were mixed in a 1.5 liter sealed mixer for 5 minutes under conditions of 100°C to obtain a master batch. Next, sulfur and the vulcanization accelerator DM were added to the obtained master batch in the amounts (parts by mass) shown in Table 3 below, and these components were mixed with an open roll under conditions of 50°C to obtain a rubber composition for the vulcanized rubber layer B-2 containing SBR.

**[Table 5]**

| Table 3 | Part by mass |
|---|---|
| Rubber composition for vulcanized rubber layer B-2 containing SBR | |
| NR (natural rubber) | 50 |
| STR-20 (TECK BEE HANG CO., LTD. (TBH)) | |
| SBR (Styrene-butadiene rubber) | 20 |
| NIPOL 1502 (Zeon Corporation) | |
| BR (Rutadiene rubber) | 30 |
| NIPOL BR 1220 (Zeon Corporation) | |
| GPF carbon black | 50 |
| DASHBLACK N660 (OCI company Ltd.) | |
| Aroma oil | 15 |
| A-OMIX (Sankyo Yuka Kogyo K. K.) | |
| C5 resin | 5 |
| Quintone A100 (Zeon Corporation) | |
| Zinc oxide | 3 |
| Zinc Oxide III (Seido Chemical Industry Co., Ltd.) | |
| Stearic acid | 2 |
| Stearic acid YR (NOF CORPORATION) | |
| vulcanization accelerator DM (di-2-benzothiazolyl disulfide) | 1.25 |
| Sanceler DM-PO (Sanshin Chemical Industry Co., Ltd.) | |
| Sulfur | 2 |
| Oil Treated Sulfur (Hosoi Chemical Industry Co., Ltd.) | |

### Preparation of rubber sheet Z

Using the rubber composition for the vulcanized rubber layer B-2 prepared as described above and a polyester cord (interdigital-shaped fabric in which a cord of three twisted polyester fibers (polyethylene terephthalate fibers) of 1670 dtex was drawn and aligned; manufactured by HYOSUNG ADVANCED MATERIALS CORPORATION; thickness 1.0 mm), an unvulcanized rubber sheet Z (thickness of one sheet was 1.5 mm) was obtained in which the polyester cord was embedded (covered) in the rubber composition for the vulcanized rubber layer B-2 so as to be drawn and aligned (interdigital state).

### Evaluation of adhesiveness

The following adhesiveness was evaluated in the present invention. The results are shown in Table 1.

### Adhesiveness to vulcanized rubber layer B-1 containing NBR

### Preparation of laminate XY

Each of the rubber sheets X produced as described above and the rubber sheet Y prepared as described above (in which the vulcanized rubber layer B-1 containing NBR was formed into a sheet as described above) are layered together to form a two-layer rubber sheet, and the two-layer rubber sheet was vulcanized with steam at 148°C under conditions of a surface pressure of 4.0 MPa for 60 minutes to obtain a laminate XY (width 25 mm, thickness 6 mm, length 100 mm, thickness of rubber sheet X after vulcanization 3 mm, thickness of rubber sheet Y after vulcanization 3 mm). When each of the rubber sheets X and the rubber sheet Y were overlaid, cellophane was slightly sandwiched between the rubber sheet X and the rubber sheet Y from one side of an end with a width of 25 mm. After the vulcanization, the cellophane was removed from the laminate XY, and a gripping portion for attaching the laminate XY to a gripper for a peel test described below was made.

### Peel test

In accordance with JIS K6256-1: 2013, a peel test was performed in which the laminate XY was used, the gripping portions of the laminate XY were gripped by a tensile tester, and the vulcanized rubber sheet Y was peeled with respect to the vulcanized rubber sheet X at a 180° peel angle and a rate of 50 mm/min.

### Evaluation reference

In the present invention, in the laminate XY, the peeling did not progress from the state of the start of the peel test, and when the vulcanized rubber sheet X or the vulcanized rubber sheet Y gripped by the gripper broke, the adhesiveness between the cured product obtained from the rubber composition and the vulcanized rubber layer B-1 containing NBR was evaluated as excellent, and this case was displayed as "Good".

In the above peel test, when the laminate XY was further peeled from the state of the start of the peel test, the adhesiveness between the cured product obtained from the rubber composition and the vulcanized rubber layer B-1 containing NBR was evaluated as poor, and this case was displayed as "Poor".

The vulcanized rubber layer B-1 containing NBR corresponds to the innermost layer in the marine hose, and the cured product obtained from the rubber composition corresponds to the interlayer adhesive layer in the marine hose; therefore, by the adhesiveness between the cured product obtained from the rubber composition and the vulcanized rubber layer B-1 containing NBR, the adhesiveness between the innermost layer and the interlayer adhesive layer in the marine hose can be evaluated.

### Adhesiveness to vulcanized rubber layer B-2 containing SBR

### Preparation of laminate XZ

One of the rubber sheets X produced as described above and two of the rubber sheets Z prepared as described above (in which the vulcanized rubber layer B-2 containing SBR was formed into a sheet as described above) were layered together in the order of the rubber sheet X, the first rubber sheet Z, and the second rubber sheet Z to form a three-layer rubber sheet (rubber sheet X/first rubber sheet Z/second rubber sheet Z), and the three-layer rubber sheet was vulcanized with steam at 148°C under conditions of a surface pressure of 4.0 MPa for 200 minutes to obtain a laminate XZ (laminate XZ: width 25 mm, thickness 6 mm, and length 100 mm, thickness of rubber sheet X after vulcanization 3 mm, total thickness of two rubber sheets Z after vulcanization 3 mm).

In the laminate XZ, the two rubber sheets Z were arranged in the laminate XZ such that a polyester cord (warp yarn bundle) of the rubber sheet Z constituting the laminate XZ was parallel with the longitudinal direction of the laminate XZ.

When each of the rubber sheets X and the rubber sheet Z were overlaid, cellophane was slightly sandwiched between the rubber sheet X and the first rubber sheet Z from one side of an end with a width of 25 mm. After the vulcanization, the cellophane was removed from the laminate XZ, and a gripping portion for attaching the laminate XZ to a gripper for a peel test described below was made.

In the obtained laminate XZ, a vulcanized product of the rubber composition for the vulcanized rubber layer B-2 is present between the rubber sheet X and the polyester cord of the first rubber sheet Z (in a state in which the polyester cord is embedded (covered) in the rubber composition for the vulcanized rubber layer B-2), and the rubber sheet X and the polyester cord do not directly contact each other.

### Peel test

In accordance with JIS K6256-1: 2013, a peel test was performed in which the laminate XZ was used, gripping portions of the laminate XZ were gripped by a tensile tester, and the vulcanized rubber sheet Z was peeled with respect to the vulcanized rubber sheet X at a 180° peel angle and a rate of 50 mm/min, and peel strength (N/mm) was measured.

### Evaluation reference

In the present invention, when the peel strength measured as described above was 6.2 N/mm or greater, the adhesiveness between the cured product obtained from the rubber composition and the vulcanized rubber layer B-2 containing SBR was evaluated as excellent.

It was evaluated that the greater the peel strength, the better the adhesiveness.

On the other hand, when the peel strength was less than 6.2 N/mm, the adhesiveness between the cured product obtained from the rubber composition and the vulcanized rubber layer B-2 containing SBR was evaluated as poor.

Since a layer formed by the vulcanized rubber layer containing SBR and polyester fibers corresponds to the carcass layer in the marine hose, the adhesiveness between the interlayer adhesive layer and the carcass layer in the marine hose can be evaluated by the adhesiveness between the cured product obtained from the rubber composition and the vulcanized rubber layer B-2 containing SBR.

### Evaluation of tensile properties

The following tensile properties were evaluated by using each rubber composition in Table 1 produced as described above. The results are shown in Table 1.

### Preparation of initial test piece

Using a 148°C press molding machine, each rubber composition produced as described above was vulcanized for 60 minutes under a surface pressure of 3.0 MPa to produce a vulcanized sheet having a thickness of 2 mm.

A JIS standard No. 3 dumbbell was punched from the vulcanized sheet to produce an initial test piece.

### Tensile test

Using each initial test piece produced as described above, a tensile test was performed in accordance with JIS K6251:2017 under conditions of 23°C at a tensile speed of 500 mm/min, and the tensile strength (TB, unit MPa) and elongation at break (EB, unit %) were measured.

### Evaluation reference: Strength of cured product

In the present invention, the strength of the cured product was evaluated by the elongation at break measured as described above.

In the present invention, when the value of elongation at break was 400% or greater, the strength of the cured product was evaluated as excellent.

It was evaluated that the greater the elongation at break, the better the strength of the cured product.

On the other hand, when the value of elongation at break was less than 400%, the strength of the cured product was evaluated as poor.

Since the cured product corresponds to the cured product of the rubber composition of the present invention, the vulcanized rubber layer A in the laminate of the present invention, and the interlayer adhesive layer that can be included in the marine hose of the present invention, the strength of the vulcanized rubber layer A in the laminate of the present invention and the strength of the interlayer adhesive layer in the marine hose can be evaluated by the strength of the cured product.

As is clear from the results shown in Table 1, Comparative Example 1 which contained natural rubber instead of containing an acrylonitrile-butadiene copolymer and contained hexamine instead of containing a predetermined melamine compound exhibited poor adhesiveness to the vulcanized rubber layer B-1 containing NBR and the vulcanized rubber layer B-2 containing SBR.

Comparative Example 2 which contained hexamine instead of containing a predetermined melamine compound exhibited poor adhesiveness to the vulcanized rubber layer B-2 containing SBR and poor strength of the cured product.

Comparative Example 3 which contained no predetermined melamine compound exhibited poor adhesiveness to the vulcanized rubber layer B-1 containing NBR and the vulcanized rubber layer B-2 containing SBR.

Comparative Examples 4 and 7 to 8 which contained hexamine instead of containing a predetermined melamine compound exhibited poor adhesiveness to the vulcanized rubber layer B-2 containing SBR.

Comparative Example 5 in which the acrylonitrile-butadiene copolymer was less than a predetermined amount exhibited poor adhesiveness to the vulcanized rubber layer B-1 containing NBR.

Comparative Example 6 in which the styrene-butadiene copolymer was less than a predetermined amount exhibited poor adhesiveness to the vulcanized rubber layer B-2 containing SBR.

In Comparative Example 9 containing no silica, the strength of the cured product was poor.

Comparative Examples 10 and 13 which contained natural rubber instead of containing an acrylonitrile-butadiene copolymer exhibited poor adhesiveness to the vulcanized rubber layer B-1 containing NBR.

Comparative Example 11 which contained natural rubber instead of containing an acrylonitrile-butadiene copolymer and contained a cresol resin instead of containing a resorcinol resin exhibited poor adhesiveness to the vulcanized rubber layer B-1 containing NBR.

Comparative Example 12 which contained natural rubber instead of containing an acrylonitrile-butadiene copolymer and contained no predetermined melamine compound exhibited poor adhesiveness to the vulcanized rubber layer B-1 containing NBR.

On the other hand, in the rubber composition of the present invention, the adhesiveness between the cured product obtained from the rubber composition of the present invention and the rubber layer containing acrylonitrile-butadiene rubber or styrene-butadiene rubber was excellent (i.e., the cured product obtained from the rubber composition of the present invention had excellent adhesiveness to the rubber layer containing acrylonitrile-butadiene rubber and excellent adhesiveness to the rubber layer containing styrene-butadiene rubber), and the strength of the cured product was excellent.

## Claims

1. A rubber composition comprising:
a rubber component containing from 30 to 80 mass% of an acrylonitrile-butadiene copolymer and from 20 to 70 mass% of a styrene-butadiene copolymer;
silica;
resorcinol resin; and
at least one melamine compound selected from the group consisting of methylol melamines, methylol melamine alkyl ethers, and condensates thereof.

2. The rubber composition according to claim 1, which has the melamine compound content of from 30 to 250 mass% of the resorcinol resin content.

3. The rubber composition according to claim 1 or 2, further comprising a sulfenamide-based vulcanization accelerator, wherein the rubber composition has the sulfenamide-based vulcanization accelerator content of from 0.7 to 1.2 parts by mass per 100 parts by mass of the rubber component.

4. The rubber composition according to any one of claims 1 to 3, which has the silica content of from 10 to 40 parts by mass per 100 parts by mass of the rubber component.

5. The rubber composition according to any one of claims 1 to 4, which has the resorcinol resin content of from 0.3 to 8.0 parts by mass per 100 parts by mass of the acrylonitrile-butadiene copolymer.

6. The rubber composition according to any one of claims 1 to 5, which is used to form a marine hose.

7. A laminate comprising:
a vulcanized rubber layer A formed using the rubber composition according to any one of claims 1 to 5;
a vulcanized rubber layer B containing acrylonitrile-butadiene rubber or styrene-butadiene rubber; and
a polyester fiber as a reinforcing layer,
the vulcanized rubber layer A being adjacent to the vulcanized rubber layer B.

8. The laminate according to claim 7, further comprising, as the vulcanized rubber layer B, a vulcanized rubber layer B-1 containing the acrylonitrile-butadiene rubber and a vulcanized rubber layer B-2 containing the styrene-butadiene rubber,
wherein the vulcanized rubber layer B-1, the vulcanized rubber layer A, and the vulcanized rubber layer B-2 are stacked in this order.

9. A marine hose formed using the rubber composition according to any one of claims 1 to 5.

10. The marine hose according to claim 9, comprising an innermost layer, an interlayer adhesive layer, and a carcass layer, which are stacked in this order, wherein
the innermost layer is a vulcanized rubber layer containing acrylonitrile-butadiene rubber,
the interlayer adhesive layer is a vulcanized rubber layer formed using the rubber composition, and
the carcass layer includes a vulcanized rubber layer containing styrene-butadiene rubber and a polyester fiber.

11. The marine hose according to claim 10, wherein the innermost layer is adjacent to the interlayer adhesive layer, and the interlayer adhesive layer is adjacent to the vulcanized rubber layer containing the styrene-butadiene rubber contained in the carcass layer.
